# FASCICULE DE BREVET EUROPEEN

(11) **EP 2 207 988 B1**
(45) Date de publication et mention de la délivrance du brevet: **25.06.2014**
(21) Numéro de dépôt: 08835731.4
(22) Date de dépôt: 02.09.2008
(51) Int. Cl.: F16L 21/08, F16L 21/00

(54) **ENSEMBLE POUR COLLIER À GRIFFES, COLLIER À GRIFFES ET LIAISON TUBULAIRE CORRESPONDANTS**
VORRICHTUNG FÜR EINE GRIFFROSETTE, GRIFFROSETTE UND ENTSPRECHENDER RÖHRENKONNEKTOR
ASSEMBLY FOR A GRIP COLLAR GRIP COLLAR AND CORRESPONDING TUBE CONNECTOR

(30) Priorité: 05.09.2007 FR 0757359
(43) Date de publication de la demande: 21.07.2010
(73) Titulaire: Saint-Gobain PAM, 54000 Nancy (FR)
(72) Inventeur: FRANCOIS-BRAZIER, Joël, F-54700 Pont-a-Mousson (FR); RENARD, Serge, F-54700 Montauville (FR)
(74) Mandataire: Blot, Philippe Robert Emile
(86) Numéro de dépôt international: PCT/FR2008/051555
(87) Numéro de publication internationale: WO 2009/044028

(56) Documents cités:
- EP-A- 1 245 889
- DE-A1- 19 901 663
- DE-C1- 3 710 852
- GB-A- 2 389 395

## Description

La présente invention concerne un ensemble pour collier à griffes, du type comprenant : un corps de base s'étendant autour d'un axe central sur une première plage angulaire inférieure à 180°, un segment à griffes s'étendant autour de l'axe central sur une deuxième plage angulaire inférieure à la première plage angulaire et munie de griffes adaptées pour s'accrocher sur la surface extérieure d'un tuyau.

Elle s'applique particulièrement aux colliers à griffes utilisés pour verrouiller deux bouts unis tubulaires.

On connaît du document EP-A-1,245,889, qui montre un ensemble selon le préambule de la revendication 1, un collier à griffes comportant une ceinture ou un corps de base dont les extrémités peuvent être serrées par deux boulons. Le collier à griffes comporte en outre un segment à griffes disposé dans la ceinture et adapté pour s'accrocher à une surface extérieure d'un tuyau.

Afin de maintenir le segment à griffes dans une position permettant l'accrochage des griffes sur le tuyau, le corps de base comporte des languettes découpées et pliées radialement vers l'intérieur sur lesquelles s'applique le bord intérieur du segment à griffes.

Ces languettes découpées sont en nombre et de taille relativement faible et ne permettent pas une bonne tenue du segment à griffes. En outre, ces languettes affaiblissent la section du corps de base.

L'invention a pour but d'augmenter la tenue des segments à griffes, et ceci de préférence avec des moyens simplifiant les opérations de fabrication.

A cet effet, invention a pour objet un ensemble du type précité, caractérisé par les caractéristiques de la revendication 1.

Selon des modes particuliers de réalisation, l'ensemble selon l'invention comporte l'une ou plusieurs des caractéristiques suivantes :
- les moyens de butée s'étendent sur une plage angulaire au moins égale à 70% de la quatrième plage angulaire de la partie courante du segment à griffes ;
- le segment à griffes est maintenu en place dans le corps de base par ses deux extrémités circonférentielles, les moyens de butée et une paroi frontale du corps de base ;
- les moyens de butée sont symétriques par rapport à un centre circonférentiel de la partie courante ;
- les moyens de butée et le segment à griffes définissent un point de contact limitant l'inclinaison du segment à griffes par rapport à l'axe central ;
- les moyens de butée comprennent une partie plastiquement déformée du corps de base ;
- les moyens de butée comprennent une nervure intérieure du corps de base ;
- le corps de base comporte une partie centrale et deux brides de fixation, et l'épaisseur de paroi des deux brides de fixation est supérieure à l'épaisseur de paroi de la partie centrale ; et
- chaque bride de fixation comprend une couche venue de matière avec la partie centrale du corps de base et une plaque de renforcement fixée à la couche.

L'invention a en outre pour objet un collier à griffes, caractérisé en ce que le collier à griffes comprend au moins deux ensembles tels que définis ci-dessus, et comprend de préférence exactement deux, trois ou quatre de tels ensembles.

Selon un mode de réalisation particulier du collier à griffes, les plaques de renforcement fixées aux couches permettent de garantir le serrage des deux bouts unis nécessaire pour la tenue en pression lorsque les brides de fixations des ensembles rentrent en contact.

En outre, l'invention a pour objet une liaison tubulaire, du type comprenant:
- un collier à griffes,
- un joint d'étanchéité, et
- deux bouts unis,
le joint d'étanchéité reliant les deux bouts unis, et le collier à griffes verrouillant la liaison entre les deux bouts unis, caractérisé en ce que le collier à griffes est un collier à griffes tel que défini ci-dessus.

L'invention sera mieux comprise à la lecture de la description qui va suivre, donnée uniquement à titre d'exemple et faite en se référant aux dessins annexés, sur lesquels :
- la figure 1 est une vue en coupe axiale d'une liaison tubulaire selon l'invention ;
- la figure 2 est une vue en perspective d'un collier à griffes selon l'invention ;
- la figure 3 est une vue axiale du collier à griffes de la figure 2 ;
- la figure 4 est une vue en coupe axiale selon la ligne III-III de la figure 3 ;
- la figure 5 est le détail agrandi IV de la figure 4 ;
- la figure 6 est une vue axiale d'une liaison tubulaire comportant un collier à griffes selon l'invention ;
- la figure 7 est le détail agrandi VII de la figure 1 ; et
- la figure 8 est une vue en perspective d'un ensemble pour collier à griffes selon l'invention.

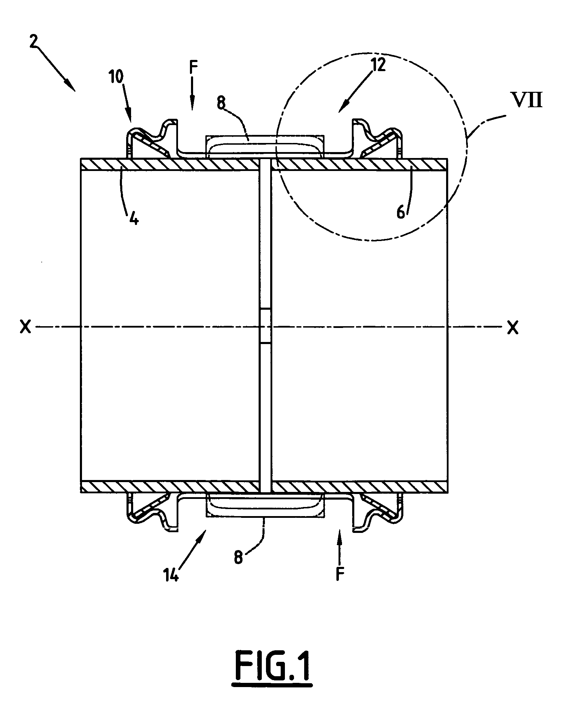

Sur la figure 1 est représentée en coupe axiale une liaison tubulaire selon l'invention, désignée par la référence générale 2.

La liaison tubulaire 2 comporte deux bouts unis 4,6 chacun formé par une extrémité d'un tuyau ou d'un raccord, un joint d'étanchéité 8 reliant de manière étanche le bout uni 4 au bout uni 6 et un collier à griffes 10.

Les bouts unis 4,6 sont fabriqués soit en métal, tel que de la fonte, soit en matière plastique, telle que du polyéthylène.

Le joint d'étanchéité 8 est d'un type connu en soi et sert à relier de manière étanche les deux bouts unis 4, 6. Le joint d'étanchéité comporte un anneau ayant au minimum deux lèvres d'étanchéité, un collier de serrage entourant l'anneau, ainsi que des moyens de serrage du collier de serrage.

Le collier à griffes 10 est adapté pour verrouiller les deux bouts unis 4,6 l'un par rapport à l'autre et pour empêcher une séparation axiale des deux bouts unis 4,6 lorsqu'un fluide sous pression se situe dans ceux-ci.

Le collier 10 s'étend autour d'un axe central X-X, qui est l'axe central de la liaison tubulaire 2. Dans ce qui suit, les expressions « axialement », « radialement » et « circonférentiellement » seront utilisées par rapport à cet axe central X-X.

Le collier à griffes 10 comporte un premier ensemble 12 et un deuxième ensemble 14. Le premier ensemble 12 et le deuxième ensemble 14 sont, hormis les moyens de serrage (voir ci-dessous), identiques. En conséquence, dans ce qui suit uniquement le premier ensemble12 sera décrit.

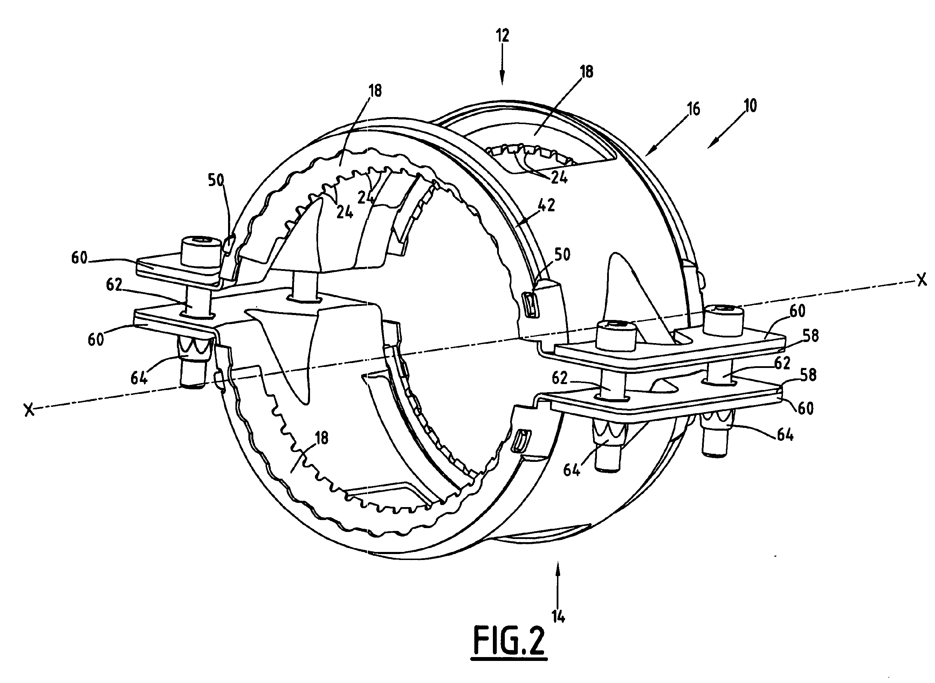

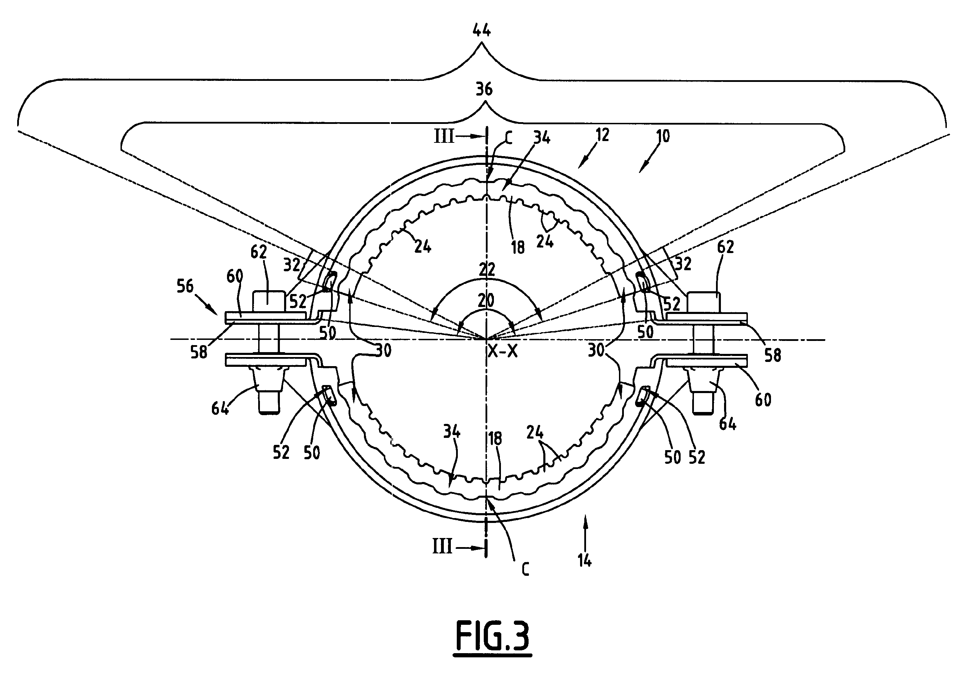

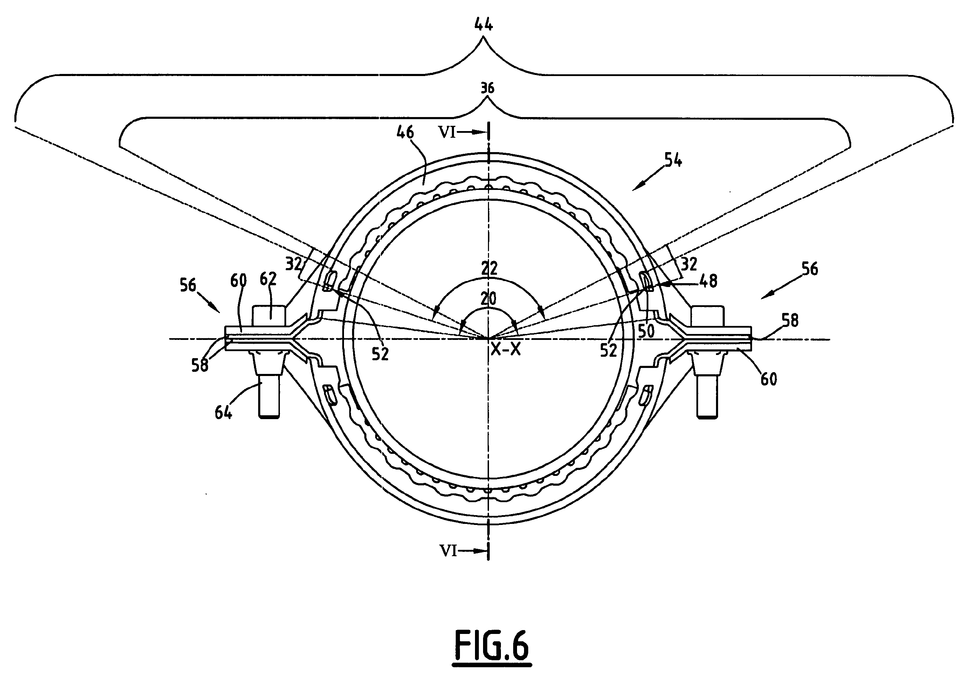

Comme représenté aux Figures 2 et 3, l'ensemble 12 pour collier à griffes comprend un corps de base 16 ou une demi-cage qui comporte une partie centrale 54 (voir Figure 6) qui s'étend autour de l'axe central X-X sur une première plage angulaire 20 inférieure à 180°pour garantir le serrage des deux bouts unis.

L'ensemble 12 est en outre muni de deux segments à griffes 18 dont un est disposé à chaque côté axial du corps de base 16.

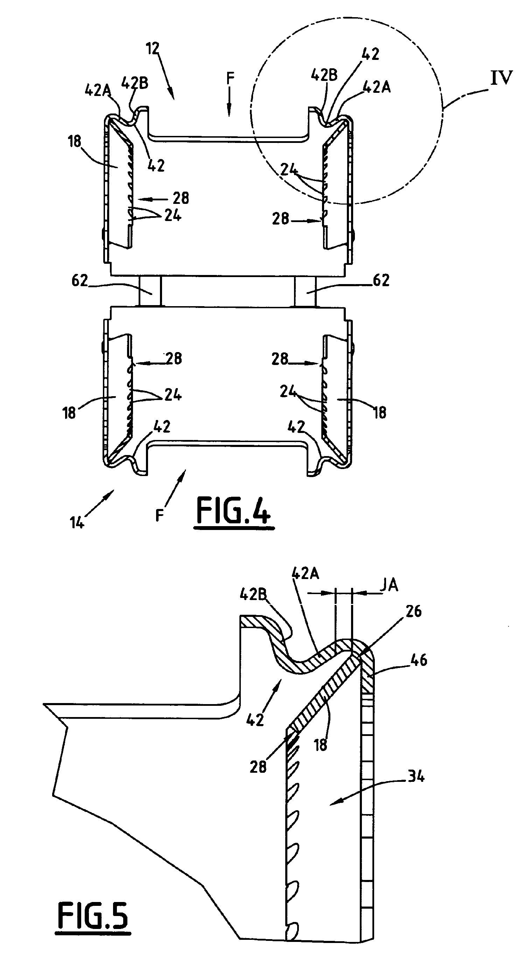

Le segment à griffes 18 s'étend autour de l'axe central X-X autour d'une deuxième plage angulaire 22, qui est inférieure à la première plage angulaire 20. Le segment à griffes 18 est muni sur sa partie radialement intérieure de griffes 24 adaptées pour s'accrocher sur la surface extérieure d'un des bouts unis 4,6. Le segment à griffes 18 a une forme générale de tronc de cône partiel et délimite un bord radialement extérieur 26 lisse ainsi qu'un bord radialement intérieur 28 portant les griffes 24 (voir figures 4 et 5). Comme ceci est visible sur la figure 4, les deux bords intérieurs 28 des segments 18 de l'ensemble 12 sont dirigés axialement l'un vers l'autre.

En se référant de nouveau à la figure 3, le segment à griffes 18 comprend deux extrémités circonférentielles 30. Chaque extrémité circonférentielle 30 s'étend sur une troisième plage angulaire 32 qui correspond à une valeur comprise entre 3% et 10% de la deuxième plage angulaire 22 pour faciliter le montage du segment dans le corps de base 16 et optimiser son action sur les bouts unis 4,6. Le segment à griffes 18 a en outre une partie courante 34 délimitée de part et d'autre par les deux extrémités circonférentielles 30.

La partie courante 34 du segment à griffes 18 s'étend sur une quatrième plage angulaire 36.

Le segment à griffes 18 est fabriqué et est traité de manière à obtenir une dureté superficielle des griffes supérieure à celle de la matière des bouts unis 4,6, Le segment à griffes 18 est fabriqué par exemple en acier.

L'ensemble pour collier à griffes 12 est en outre muni de moyens de butée 40 adaptés pour limiter une déformation du segment à griffes 18 en torsion suivant un axe perpendiculaire à une section ou à un plan radial par rapport à l'axe central X-X. Plus particulièrement, les moyens de butée 40 sont adaptés pour bloquer la torsion de la partie courante 34 lors du serrage du collier à griffes 10 sur les bouts unis 4, 6. Ces moyens de butée 40 comprennent une nervure 42 (voir figures 4 et 5) disposée sur le corps de base 16. La nervure 42 s'étend circonférentiellement en continu sur une plage angulaire de butée 44 (voir figure 2), qui est au moins égale à 70% de la plage angulaire 36 de la partie courante 34 du segment à griffes 18. Ainsi, le segment à griffes 18 est maintenu contre une déformation sur une grande partie de sa circonférence et les griffes 24 s'accrochent particulièrement bien aux bouts unis 4,6.

D'une manière générale, il est possible que les moyens de butée 40 s'étendent en continu ou de façon ponctuelle tout au long de la plage angulaire de butée 44 autour de l'axe central X-X qui correspond à au moins 30 % de la deuxième plage angulaire 22 et de préférence à au moins 70 % de cette deuxième plage 22.

En coupe selon un plan radial, la nervure 42 a une forme générale en V ou en U dont les extrémités de deux branches 42A, 42B sont fixées aux corps de base 16 (cf. Fig. 4 et 5). La nervure 42 est ouverte radialement vers l'extérieur.

La nervure intérieure 42 est fabriquée de préférence par déformation plastique du corps de base 16. En particulier, la nervure 42 est fabriquée par emboutissage du corps de base 16. Ainsi, les moyens de butée 40 sont solidaires du corps de base 16 et sont venus de matière avec celui-ci. Une découpe du corps de base 16 n'est pas nécessaire et la section de ce corps de base n'est pas affaiblie. En conséquence, le corps de base 16 a une grande résistance à la déformation.

D'une manière générale, les moyens de butée 40 sont de préférence symétriques par rapport à un centre circonférentiel C de la partie courante 34.

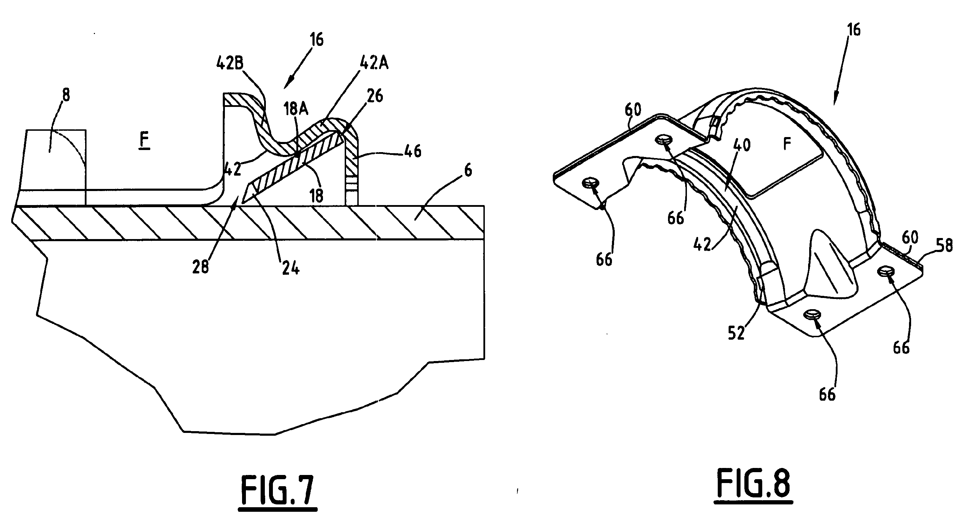

Comme ceci est visible sur les figures 5 et 7, la nervure 42 est agencée de telle sorte qu'il existe obligatoirement un point de contact 18A (cf. Fig. 7) entre le segment 18 et cette nervure 42. Le point de contact 18A est situé proche de la mi-hauteur radiale du segment 18. Ce point de contact 18A limite l'inclinaison du segment 18 et lui évite d'être soumis à un effort de traction trop important dans la zone où se situent les griffes lors de la mise en place du collier à griffes 10 sur les bouts unis 4,6, et ce quels que soient les dimensions, tolérances incluses, et les écarts de positionnement de ces bouts unis 4,6.

En se référant à la figure 5, on voit que le corps de base 16 comporte une paroi frontale 46. Le segment à griffes 18 est inséré entre la nervure 42 et cette paroi frontale 46. A un état non monté de l'ensemble 12, la partie courante 34 du segment à griffes 18 et la nervure 42 délimitent un jeu axial JA entre eux, permettant un déplacement axial limité de la partie courante 34 par rapport au corps de base 16.

L'ensemble 12 est muni de moyens de retenue 48 du segment à griffes 18 radialement à l'intérieur par rapport au corps de base 16. Ces moyens de retenue 48 comprennent deux oreilles 50 disposées sur les extrémités circonférentielles 30 du segment à griffes 18. Ces oreilles 50 s'engagent dans deux ouvertures complémentaires 52 aménagées dans le corps de base 16. Ainsi, le segment à griffes 18 est maintenu dans le corps de base 16 par ses deux extrémités 30, la nervure 42 et la paroi frontale 46.

Le corps de base 16 est constitué d'une partie centrale 54 et de deux brides de fixation 56. Chaque bride de fixation 56 comporte une couche 58 venue de matière avec la partie centrale 54 et une plaque de renforcement 60 fixée à la couche 58. L'épaisseur de paroi des deux brides de fixation 56 est supérieure à l'épaisseur de paroi de la partie centrale 54. Ainsi, lors du serrage du collier 10, les brides de fixation 56 ont une déformation réduite et contrôlée pour garantir le serrage des deux bouts unis 4,6, quels que soient les dimensions, tolérances incluses, et les écarts de positionnement de ces bouts unis 4,6.

Le collier à griffes 10 comporte en outre des moyens de serrage du premier ensemble 12 et du deuxième ensemble 14 l'un contre l'autre. Ces moyens de serrage comportent des vis 62 et des écrous 64. De manière avantageuse, tous les écrous 64 sont fixés à l'un des ensembles, dans le cas présent aux brides de fixation 56 de l'ensemble 14, tandis que l'autre ensemble, par exemple l'ensemble 12, ne porte aucun écrou, mais comporte des trous 66 aménagés dans chaque bride de fixation 56 (cf. Fig. 8) pour recevoir les vis 62.

A l'exception des trous 66 pour le passage des vis 62 et des écrous 64, les ensembles 12, 14 peuvent être identiques, ce qui facilite la logistique et la fabrication.

Aussi, les deux ensembles 12, 14 peuvent être séparés et la partie centrale 54 de l'un des ensembles 12 superposée à la partie centrale 54 de l'autre ensemble 14, ce qui réduit l'encombrement lors du transport.

Le corps de base 16 comporte également une fenêtre F pour le passage de moyens de serrage du joint d'étanchéité 8.

En variante, la nervure 42 n'est pas venue de matière avec le corps de base 16 mais est solidarisée, par exemple par soudage à celui-ci.

En variante encore, les moyens de butée 40 comprennent des nervures de butée partielles qui sont espacées circonférentiellement et dont chacune s'étend sur une partie de la plage angulaire de butée. Ces nervures de butée partielles s'appliquent alors de façon ponctuelle sur le segment à griffes. Dans ce cas, la plage angulaire de butée est définie comme la plage angulaire incluse par l'ensemble des nervures de butée partielles associées à un segment à griffes.

En variante, le collier à griffes 10 comprend exactement trois voire quatre ensembles. Dans ce cas, le corps de base 16 ou sa partie centrale 54 s'étend sensiblement sur une plage respectivement de 120° ou 90° au tour de l'axe central X-X. Les moyens de serrage peuvent alors être répartis suivant des critères différents que ceux indiqués en référence au mode de réalisation précédemment décrit.

## Revendications

1. Ensemble (12, 14) pour collier à griffes, du type comprenant :
- un corps de base (16) s'étendant autour d'un axe central (X-X) sur une première plage angulaire (20) inférieure à 180°,
- un segment à griffes (18) s'étendant autour de l'axe central (X-X) sur une deuxième plage angulaire (22) inférieure à la première plage angulaire et munie de griffes (24) adaptées pour s'accrocher sur la surface extérieure d'un tuyau, l'ensemble comportant des moyens de butée (40) adaptés pour limiter la déformation du segment à griffes (18) en torsion suivant un axe perpendiculaire à un plan radial, les moyens de butée étant fixés au corps de base, le segment à griffes comprenant deux extrémités circonférentielles (30) et une partie courante (34) délimitée de part et d'autre par les deux extrémités circonférentielles, chacune des extrémités circonférentielles (30) s'étendant sur une troisième plage angulaire (32) qui correspond à une valeur comprise entre 3% et 10% de la deuxième plage angulaire (22), la partie courante (34) s'étendant sur une quatrième plage angulaire (36), les moyens de butée (40) s'étendant en continu ou de façon ponctuelle tout au long d'une plage angulaire de butée (44) autour de l'axe central (X-X), **caractérisé en ce que** la plage angulaire de butée (44) autour de l'axe central (X-X) correspond à au moins 30 %, de préférence à au moins 70 %, de la deuxième plage angulaire (22) et **en ce que** la partie courante (34) du segment à griffes et les moyens de butée (40) définissent, à l'état non monté de l'ensemble, un jeu axial (JA) entre eux permettant un déplacement axial limité de la partie courante (34) par rapport au corps de base (16).

2. Ensemble selon la revendication 1, **caractérisé en ce que** les moyens de butée (40) s'étendent sur une plage angulaire au moins égale à 70% de la quatrième plage angulaire (36) de la partie courante (34) du segment à griffes (18).

3. Ensemble selon la revendication 1 ou 2, **caractérisé en ce que** le segment à griffes (18) est maintenu en place dans le corps de base par ses deux extrémités circonférentielles (30), les moyens de butée (42) et une paroi frontale (46) du corps de base (16).

4. Ensemble selon l'une quelconque des revendications 1 à 3, **caractérisé en ce que** les moyens de butée (40) sont symétriques par rapport à un centre circonférentiel (C) de la partie courante (34).

5. Ensemble selon l'une quelconque des revendications 1 à 4, **caractérisé en ce que** les moyens de butée (42) et le segment à griffes (18) définissent un point de contact (18A) limitant l'inclinaison du segment à griffes par rapport à l'axe central (X-X).

6. Ensemble selon la revendication 5, **caractérisé en ce que** le point de contact (18A) est situé à la mi-hauteur radiale du segment à griffes (18).

7. Ensemble selon l'une quelconque des revendications 1 à 6, **caractérisé en ce que** les moyens de butée (40) comprennent une partie plastiquement déformée (42) du corps de base.

8. Ensemble selon l'une quelconque des revendications 1 à 7, **caractérisé en ce que** les moyens de butée (40) comprennent une nervure intérieure (42) du corps de base.

9. Ensemble selon l'une quelconque des revendications 1 à 8, **caractérisé en ce que** le corps de base (16) comporte une fenêtre (F) pour le passage de moyens de serrage d'un joint d'étanchéité (8).

10. Ensemble selon l'une quelconque des revendications 1 à 9, **caractérisé en ce que** le corps de base (16) comporte une partie centrale (54) et deux brides de fixation (56), et **en ce que** l'épaisseur de paroi des deux brides de fixation (56) est supérieure à l'épaisseur de paroi de la partie centrale (54).

11. Ensemble selon la revendication 10, **caractérisé en ce que** chaque bride de fixation (56) comprend une couche (58) venue de matière avec la partie centrale (54) du corps de base et une plaque de renforcement fixée à la couche (58).

12. Collier à griffes, **caractérisé en ce que** le collier à griffes comprend au moins deux ensembles (12,14) selon l'une quelconque des revendications précédentes, et comprend de préférence exactement deux, trois ou quatre de tels ensembles.

13. Collier à griffes selon la revendication 12, **caractérisé en ce qu'**il comprend au moins un ensemble selon la revendication 11, et **en ce que** les plaques de renforcement fixées aux couches (58) permettent de garantir le serrage des deux bouts unis (4,6) nécessaire pour la tenue en pression lorsque les brides de fixations (56) des ensembles (12) et (14) rentrent en contact.

14. Liaison tubulaire, du type comprenant :
- un collier à griffes (10),
- un joint d'étanchéité (8), et
- deux bouts unis (4,6),
le joint d'étanchéité reliant les deux bouts unis (4,6), et le collier à griffes (10) verrouillant la liaison entre les deux bouts unis, **caractérisé en ce que** le collier à griffes est un collier à griffes (10) selon la revendication 12 ou 13.

15. Liaison tubulaire selon la revendication 14, **caractérisé en ce que** le joint d'étanchéité (8) comporte un anneau ayant au minimum deux lèvres d'étanchéité, un collier de serrage entourant l'anneau, ainsi que des moyens de serrage du collier de serrage.

## Patentansprüche

1. Vorrichtung (12, 14) für eine Krallenschelle, umfassend:
- einen Grundkörper (16), der sich um eine Mittelachse (X-X) über einen ersten Winkelbereich (20) kleiner als 180° erstreckt,
- ein Krallensegment (18), das sich um die Mittelachse (X-X) über einen zweiten Winkelbereich (22), der kleiner als der erste Winkelbereich ist, erstreckt und mit Krallen (24) versehen ist, die dazu ausgebildet sind, sich an der äußeren Oberfläche eines Rohrs festzuhalten, wobei die Vorrichtung am Grundkörper befestigte Anschlagmittel (40) umfasst, die dazu ausgebildet sind, die Torsionsverformung des Krallensegments (18) entlang einer zu einer radialen Ebene senkrechten Achse zu begrenzen, wobei das Krallensegment zwei Umfangsenden (30) und einen laufenden Abschnitt (34) umfasst, der auf beiden Seiten durch die zwei Umfangsenden begrenzt ist, wobei sich die Umfangsenden (30) jeweils über einen dritten Winkelbereich (32) erstrecken, der einem Wert von 3 % bis 10 % des zweiten Winkelbereichs (22) entspricht, der laufende Abschnitt (34) sich über einen vierten Winkelbereich (36) erstreckt und die Anschlagmittel (40) sich kontinuierlich oder punktuell über einen gesamten Anschlagswinkelbereich (44) um die Mittelachse (X-X) erstrecken,
**dadurch gekennzeichnet,**
**dass** der Anschlagswinkelbereich (44) um die Mittelachse (X-X) mindestens 30 %, vorzugsweise mindestens 70 %, des zweiten Winkelbereichs (22) entspricht und dass der laufende Abschnitt (34) des Krallensegments und die Anschlagmittel (40) im nicht montierten Zustand der Vorrichtung zwischen sich ein axiales Spiel (JA) definieren, das eine begrenzte axiale Verlagerung des laufenden Abschnitts (34) gegenüber dem Grundkörper (16) ermöglicht.

2. Vorrichtung nach Anspruch 1,
**dadurch gekennzeichnet,**
**dass** sich die Anschlagmittel (40) über einen Winkelbereich erstrecken, der mindestens 70 % des vierten Winkelbereichs (36) des laufenden Abschnitts (34) des Krallensegments (18) entspricht.

3. Vorrichtung nach Anspruch 1 oder 2,
**dadurch gekennzeichnet,**
**dass** das Krallensegment (18) durch seine beiden Umfangsenden (30), die Anschlagsmittel (42) und eine Vorderwand (46) des Grundkörpers (16) im Grundkörper fixiert ist.

4. Vorrichtung nach einem der Ansprüche 1 bis 3,
**dadurch gekennzeichnet,**
**dass** die Anschlagmittel (40) gegenüber einer Umfangsmitte (C) des laufenden Abschnitts (34) symmetrisch sind.

5. Vorrichtung nach einem der Ansprüche 1 bis 4,
**dadurch gekennzeichnet,**
**dass** die Anschlagsmittel (42) und das Krallensegment (18) einen die Neigung des Krallensegments gegenüber der Mittelachse (X-X) begrenzenden Kontaktpunkt (18A) aufweisen.

6. Vorrichtung nach Anspruch 5,
**dadurch gekennzeichnet,**
**dass** sich der Kontaktpunkt (18A) auf halber radialer Höhe des Krallensegments (18) befindet.

7. Vorrichtung nach einem der Ansprüche 1 bis 6,
**dadurch gekennzeichnet,**
**dass** die Anschlagmittel (40) einen plastisch verformten Abschnitt (42) des Grundkörpers umfassen.

8. Vorrichtung nach einem der Ansprüche 1 bis 7,
**dadurch gekennzeichnet,**
**dass** die Anschlagmittel (40) eine innere Rippe (42) des Grundkörpers umfassen.

9. Vorrichtung nach einem der Ansprüche 1 bis 8,
**dadurch gekennzeichnet,**
**dass** der Grundkörper (16) eine Ausnehmung (F) für die Anordnung von Klemmmitteln einer Dichtung (8) aufweist.

10. Vorrichtung nach einem der Ansprüche 1 bis 9,
**dadurch gekennzeichnet,**
**dass** der Grundkörper (16) einen mittleren Abschnitt (54) und zwei Befestigungsflansche (56) aufweist, und dass die Wandstärke der beiden Befestigungsflansche (56) größer ist als die Wandstärke des mittleren Abschnitts (54).

11. Vorrichtung nach Anspruch 10,
**dadurch gekennzeichnet,**
**dass** jeder Befestigungsflansch (56) eine Auflage (58), die einstückig mit dem mittleren Abschnitt (54) des Grundkörpers ausgebildet ist, und eine an der Auflage (58) befestigte Verstärkungsscheibe umfasst.

12. Krallenschelle,
**dadurch gekennzeichnet,**
**dass** die Krallenschelle mindestens zwei Vorrichtungen (12, 14) nach einem der vorhergehenden Ansprüche umfasst und vorzugsweise genau zwei, drei oder vier solcher Vorrichtungen umfasst.

13. Krallenschelle nach Anspruch 12,
**dadurch gekennzeichnet,**
**dass** sie mindestens eine Vorrichtung nach Anspruch 11 umfasst, und dass die an den Auflagen (58) befestigten Verstärkungsscheiben es ermöglichen, den für die Druckfestigkeit notwendigen Halt der beiden zusammengefügten Enden (4, 6) sicherzustellen, wenn die Befestigungsflansche (56) der Vorrichtungen (12) und (14) in Kontakt kommen.

14. Rohrverbindung, umfassend:
- eine Krallenschelle (10),
- eine Dichtung (8), und
- zwei zusammengefügte Enden (4, 6),
wobei die Dichtung die beiden zusammengefügten Enden (4, 6) verbindet, und die Krallenschelle (10) die Verbindung zwischen den beiden zusammengefügten Enden verriegelt,
**dadurch gekennzeichnet,**
**dass** die Krallenschelle eine Krallenschelle (10) nach Anspruch 12 oder 13 ist.

15. Rohrverbindung nach Anspruch 14,
**dadurch gekennzeichnet,**
**dass** die Dichtung (8) einen Ring aufweist, der mindestens zwei Dichtlippen, eine den Ring umgebende Klemmschelle sowie Klemmmittel der Klemmschelle aufweist.

## Claims

1. Assembly (12, 14) for claw collar, of the type comprising:
- a base body (16) extending around a central axis (X-X) over a first angular range (20) of less than 180°,
- a claw segment (18) extending around the central axis (X-X) over a second angular range (22) of less than the first angular range and provided with teeth (24) adapted to hold onto the external surface of a pipe,
the assembly having abutment means (40) adapted to limit the torsional deformation of the claw segment (18) along an axis perpendicular to a radial plane, the abutment means being fixed to the base body,
the claw segment comprising two circumferential extremities (30) and a main part (34) delimited on either side by the two circumferential extremities, the circumferential extremities (30) extending over a third angular range (32) which corresponds to a value between 3% and 10% of the second angular range (22), the main part (34) extending over a fourth angular range (36),
the abutment means (40) extending continuously or at intervals along an abutment angular range (44) around the central axis (X-X),
**characterized in that** the abutment angular range (44) around the central axis (X-X) corresponds to at least 30%, and preferably to at least 70%, of the second angular range (22),
and **in that** the main part (34) of the claw segment and the abutment means (40) define, when the assembly is in its non-fitted state, an axial clearance (JA) between them allowing a limited movement of the main part (34) relative to the base body (16).

2. Assembly according to claim 1, **characterised in that** the abutment means (40) extend over an angular range equal to at least 70% of the fourth angular range (36) of the main part (34) of the claw segment (18).

3. Assembly according to claim 1 or 2, **characterised in that** the claw segment (18) is held in place in the base body by its two circumferential extremities (30), the abutment means (40) and a frontal wall (46) of the base body (16).

4. Assembly according to any of claims 1 to 3, **characterised in that** the abutment means (40) are symmetrical relative to a circumferential centre (C) of the main part (34).

5. Assembly according to any of claims 1 to 4, **characterised in that** the abutment means (40) and the claw segment (18) define a point of contact (18A) limiting the inclination of the claw segment relative to the central axis (X-X).

6. Assembly according to claim 5, **characterised in that** the point of contact (18A) is situated at the radial half-height of the claw segment (18).

7. Assembly according to any of claims 1 to 6, **characterised in that** the abutment means (40) include a plastically deformed part (42) of the base body.

8. Assembly according to any of claims 1 to 7, **characterised in that** the abutment means (40) include an internal rib (42) of the base body.

9. Assembly according to any of claims 1 to 8, **characterised in that** the base body (16) has a window (F) for the passage of means for tightening a sealing joint (8).

10. Assembly according to any of claims 1 to 9, **characterised in that** the base body (16) has a central part (54) and two fixing flanges (56), and **in that** the wall thickness of the two fixing flanges (56) is greater than the wall thickness of the central part (54).

11. Assembly according to claim 10, **characterised in that** each fixing flange (56) comprises a layer (58) made integral with the central part (54) of the base body and a reinforcing plate fixed to the layer (58).

12. Claw collar, **characterised in that** the claw collar comprises at least two assemblies (12, 14) according to any one of the preceding claims, and preferably comprises exactly two, three or four such assemblies.

13. Claw collar according to claim 12, **characterised in that** it comprises at least one assembly according to claim 11, and **in that** the reinforcing plates fixed to the layers (58) ensure the clamping of the two spigot ends (4,6) necessary for pressure resistance when the fixing flanges (56) of the assemblies (12) and (14) make contact.

14. Tubular connection, of the type comprising:
- a claw collar (10),
- a sealing joint (8), and
- two spigot ends (4,6),
the sealing joint joining the two spigot ends (4,6), and the claw collar (10) locking the connection between the two spigot ends, **characterised in that** the claw collar is a claw collar (10) according to claim 12 or claim 13.

15. Tubular connection according to claim 14, **characterised in that** sealing joint (8) has a ring with a minimum of two sealing lips, a clamp collar surrounding the ring, and also means for tightening the clamp collar.
